# EUROPEAN PATENT APPLICATION

(11) **EP 1 383 118 A2**
(43) Date of publication of application: **21.01.2004**
(21) Application number: 03254378.7
(22) Date of filing: 10.07.2003
(51) Int. Cl.: G11B 7/125, G11B 7/0045

(54) **Apparatus and method for information recording, and device and method for waveform data generation**

(30) Priority: 15.07.2002 JP 2002206137
(71) Applicant: Pioneer Corporation, Meguro-ku, Tokyo (JP)
(72) Inventor: Kato, Masahiro, c/o Pioneer Corporation, Tokorozawa-shi Saitama (JP); Yone, Tatsuhiro, c/o Pioneer Corporation, Tokorozawa-shi Saitama (JP)
(74) Representative: Haley, Stephen

(57) **Abstract**

In a recording unit (1) of an information recording apparatus (30) which performs information recording on an optical disc (2) and the like, recording waveform data (S10) defining a driving pulse to be supplied to a recording light source such as a laser diode (LD) is prepared as digital data. The digital data is produced in consideration of individual characteristics caused by the laser diode (LD) and the laser driver (22) and the combination thereof so that preferred laser emitting waveforms can be obtained when the laser diode and the laser driver are utilized, and the data is stored in advance. During actual information recording, the prepared digital data are read out and the driving pulse waveforms (S10) are generated according to data to be recorded, a recording power (Pw) and the like. The driving pulse waveforms (S10) are converted to analog signals (S12), by which a laser diode is driven. Accordingly, effects of individual characteristics of the laser diode and the like are eliminated and appropriate information recording can be performed.

## Description

The present invention relates to an information recording on an optical disc.

Information recording on a recordable-type optical disc on which information is additionally recordable and rewritable is performed by driving a laser light source by a pulse signal corresponding to recording data, generating a recording laser light and irradiating it on an information recording surface of the optical disc. As a laser light source, a semiconductor laser such as a laser diode is utilized. Power of the recording laser light is controlled by controlling current quantity which is supplied to the laser diode by a driving circuit such as a laser driver. The laser driver switches plural current sources whose current quantity is preset according to a driving pulse signal corresponding to information to be recorded, and drives the laser diode. The driving pulse signal controls the laser emitting power from the laser diode, and recording pits (recording marks) corresponding to data to be recorded are formed on the optical disc.

A semiconductor laser utilized as a laser light source has an individual characteristic, and a laser emitting waveform which is actually emitted from the semiconductor laser is affected by the individual characteristic of the semiconductor laser itself. Further, the laser emitting waveform is also varied owing to the characteristics of the driving circuit which supplies the current to the semiconductor laser, a combination of the semiconductor laser and the driving circuit, and a distance between them. For example, if the driving current is supplied to the semiconductor laser in accordance with the driving pulse signal, an overshoot and an undershoot often occur on the laser emitting waveform.

There is known a method of inserting a resistor and a condenser in parallel with the laser diode as a countermeasure to the overshoot and the undershoot in the laser emitting waveform. Those kinds of circuits formed by the resistor and the condenser are called snubber circuits. Those circuits limit high-frequency component in the driving pulse signals of the laser diodes and suppress the overshoot and the undershoot in the laser emitting waveforms.

However, there are some problems in a method that the overshoot and the undershoot are corrected by the snubber circuit. For example, the first problem is that the laser emitting waveform is delayed. As described above, since the snubber circuit limits the high-frequency component of the driving pulse signal, the signal is delayed- Accordingly, the rise-up time and the fall-down time of the laser emitting waveform are delayed.

The second problem is that the snubber circuit cannot work on both the overshoot and the undershoot appropriately. The frequency components of the overshoot and the undershoot occurring on the laser emitting waveform are generally different, but the time constant of the snubber circuit is determined to one by the values of the resistor and the condenser used in the snubber circuit. As a result, the snubber circuit cannot work on the frequencies of both the overshoot and the undershoot at the same time, and both of them cannot be effectively eliminated.

The third problem is that level tilt component of the laser emitting waveform cannot be corrected by the snubber circuit. As a problem which can be caused by the individual characteristic of the semiconductor laser, a level tilt may take place in the laser emitting waveform in addition to the overshoot and the undershoot. Namely, in a case that the semiconductor laser is driven by a rectangular driving pulse signal, the level tilt may occur in the actual laser emitting waveform owing to the individual characteristic of the laser diode. Since the frequency of such level tilt is very low, it cannot be corrected by the snubber circuit.

The present invention has been achieved in order to solve the above problems. It is an object of this invention to effectively correct influence caused by the individual characteristics of the light source such as a semiconductor laser, the driving circuit and the combination thereof, thereby to enable high-quality recording.

According to one aspect of the present invention, there is provided an information recording apparatus including: a light source which emits a recording light for information recording; a recording waveform data generating unit which generates recording waveform data which is predetermined digital data corresponding to an input recording signal; a D/A converting unit which D/A-converts the recording waveform data to generate a driving pulse signal; and a driving unit which drives the light source to emit the recording light based on the driving pulse signal, wherein the recording waveform data is determined in accordance with characteristics of the light source, the driving unit and a combination thereof.

The above information recording apparatus records information onto a storage medium such as an optical disc by irradiating a recording light on to the recording surface thereof Based on the input recording signal, a digital recording waveform data is generated, and is then converted to an analog driving pulse signal. The light source is driven by the driving pulse signal to emit the recording light, thereby the information is recorded on the storage medium. Since the recording waveform data is digital data determined in accordance with the characteristics of the light source, the driving unit and the combination of the light source and the driving unit, the information can be accurately recorded.

The recording waveform data generating unit may include a unit which generates a recording strategy signal based on the recording signal and strategy information; a storing unit which stores predetermined waveform data determined in accordance with the characteristics of the light source, the driving unit and the combination thereof, for pulse waveforms of plural pulse widths; and a generating unit which obtains the waveform data corresponding to the pulse waveform forming the strategy signal from the storing unit and generates the recording waveform data

By the above recording waveform data generating unit, waveform data is predetermined in accordance with the characteristics of the light source, the driving unit and the combination thereof, and stored in the storing unit for pulse waveforms of plural pulse widths. The recording strategy signal is generated based on the recording signal and the strategy signal, and the recording waveform data is generated by obtaining the waveform data stored in the storing unit. Therefore, the recording waveform data is generated in accordance with the characteristics of the light source and the like.

Alternatively, the recording waveform data generating unit may include: a storing unit which stores predetermined waveform data determined in accordance with the characteristics of the light source, the driving unit and the combination thereof, for recording waveform corresponding to plural recording signals; and a generating unit which obtains waveform data corresponding to the input recording signal from the storing unit and generates the recording waveform data.

In this feature, the waveform data corresponding to the recording signal is predetermined in accordance with the characteristics of the light source and the like, and is stored in advance. By referring to the storing unit, the recording waveform data is generated. Therefore, the recording waveform data is generated in accordance with the characteristics of the light source and the like.

The storing unit may store the waveform data for each of a recording power which is a power of a recording light emitted from the light source in recording, and the generating unit refers to the storing unit according to a recording power to be utilized and generates the recording waveform data. Therefore, the recording waveform data can be appropriately determined in accordance with the recording power.

The recording waveform data may include a level for suppressing an overshoot and/or an undershoot at a position corresponding to a position at which a waveform of the recording light emitted from the light source forms the overshoot and/or theundershoot. Therefore, the influence of the overshoot and/or undershoot which may occur in the driving pulse signal can be eliminated.

The recording waveform data may have a level for canceling a level tilt in a case that a waveform of a recording light emitted from the light source has the level tilt- Therefore, the influence of the level tile which may occur in the driving pulse signal can be eliminated.

According to another aspect of the present invention, there is provided an information recording method executed by an information recording apparatus which includes a light source which emits a recording light for information recording and a driving unit of the light source, including: a process which generates recording waveform data which is predetermined digital data corresponds to an input recording signal and determined in accordance with characteristics of the light source, the driving unit and a combination thereof; a process which generates a driving pulse signal by D/A-converting the recording waveform data; and a process which performs information recording by driving the light source by the driving unit to emit the recording light based on the driving pulse signal

By the above information recording method, the recording waveform data, which is predetermined digital data, is generated, and is then converted to the analog driving pulse signal. The information recording is performed by driving the light source by the driving pulse signal. Therefore, the recording waveform data is generated in accordance with the characteristics of the light source and the like.

According to still another aspect of the present invention, there is provided an information recording apparatus including: a light source which emits a recording light for information recording; a strategy signal generating unit which generates a strategy signal which is a pulse waveform signal corresponding to an input recording signal; a correcting data generating unit which generates correcting data which is predetermined digital data corresponding to an input recording signal; a D/A converting unit which D/A-converts the correcting data to generate correcting signal which is an analog signal; an adding unit which adds the strategy signal and the correcting signal to generate a driving pulse signal; and a driving unit which drives the light source to emit the recording light based on the driving pulse signal, wherein the correcting data is determined in accordance with characteristics of the light source, the driving unit and a combination thereof.

According to the similar aspect of the present invention, there is provided an information recording method which is executed by an information recording apparatus including a light source which emits a recording light for information recording and a driving unit of the light source, including: a process which generates a strategy signal which is a pulse waveform signal corresponding to an input recording signal; a process which generates correcting data which corresponds to the input recording signal and is digital data predetermined in accordance with characteristics of the light source, the driving unit and a combination thereof; a process which D/A-converts the correcting data to generate a correcting signal which is an analog signal; a process which adds the strategy signal and the correcting signal to generate a driving pulse signal; and a process which executes information recording by driving the light source to emit the recording light based on the driving pulse signal.

According to the above information recording apparatus or method, information is recorded onto a storage medium such as an optical disc by irradiating a recording light on to the recording surface thereof. Based on the input recording signal, the strategy signal and the digital correcting data are generated. The digital correcting data is converted to an analog correcting signal and added to the strategy signal to generate the driving pulse signal. The information recording is performed by driving the light source by the driving pulse signal. Since the correcting data is digital data determined in accordance with the characteristics of the light source, the driving unit and the combination of the light source and the driving unit, the information can be accurately recorded.

The correcting data may include a level for suppressing an overshoot and/or an undershoot at a position corresponding to a position at which a waveform of a recording light emitted from the light source forms the overshoot and/or the undershoot. Therefore, the influence of the overshoot and/or undershoot which may occur in the driving pulse signal can be eliminated.

The correcting data may have a level for canceling a level tilt in a case that a waveform of a recording light emitted from the light source includes the level tilt, Therefore, the influence of the level tile which may occur in the driving pulse signal can be eliminated.

According to still another aspect of the present invention, there is provided a waveform data generating device including: a unit which obtains set waveform data which is digital data corresponding to a recording signal; a D/A converting unit which D/A-converts the set waveform data to generate a driving pulse signal; a driving unit which drives a light source by the driving pulse signal to emit a recording light; a light detecting unit which receives the recording light and generates a detecting signal; an A/D converting unit which A/D-converts the detecting signal and generates detected waveform data; a unit which compares a prepared target waveform data and the detected waveform data to calculate error data; a unit which updates the set waveform data in a case that the error data is larger than a predetermined allowable error; and a unit which stores corresponding set waveform data as waveform data corresponding to the recording signal in a case that the error data is smaller than the predetermined allowable error.

According to the similar aspect of the present invention, there is provided a waveform data generating method including: a first process which obtains set waveform data which is digital data corresponding to a recording signal; a second process which D/A-converts the setting waveform data to generate a driving pulse signal; a third process which drives a light source by the driving pulse signal to emit a recording light; a fourth process which receives the recording light and generates a detecting signal; a fifth process which A/D-converts the detecting signal and generates detecting waveform data; a sixth process which compares a prepared target waveform data and the detecting waveform data and calculates error data; and a process which updates the set waveform data and repeats the processes from the first process to the sixth process in a case that the error data is larger than a predetermined allowable error; and a process which stores corresponding set waveform data as waveform data corresponding to the recording signal in a case that the error data is smaller than the predetermined allowable error.

The above waveform data generating device or method is used in an information recording apparatus which records information onto a storage medium such as an optical disc. Digital set waveform data is converted to the analog driving pulse signal, and the light source is driven to emit recording light. The light reflected by the storage medium is detected and converted to the digital detected waveform data. The detected waveform data is compared with the target waveform data to calculate error data, and the set waveform data is updated until the error data becomes smaller than the predetermined allowable error. The set waveform data thus obtained is stored in a storage unit or the like. Therefore, the waveform data within the allowable error range can be produced. The waveform data thus produced is used in recording information on the storage medium.

The nature, utility, and further features of this invention will be more clearly apparent from the following detailed description with respect to preferred embodiment of the invention when read in conjunction with the accompanying drawings briefly described below.

In the Drawings;
FIG. 1 is a block diagram schematically showing a structure of a recording unit according to an embodiment of the present invention;
PIG. 2 is a block diagram schematically showing a structure of an information recording and reproduction apparatus according to a preferred example of the present invention;
FIG. 3 is a block diagram showing a structure of a recording control unit shown in FIG. 2;
FIG. 4 shows an example of a waveform control table;
FIGS. 5A to 5C show a pulse waveform of which pulse width is 1T, a pulse waveform affected by overshoot and undershoot and a set waveform data stored in a waveform control table;
FIG. 6 is a block diagram schematically showing a structure of a waveform control table producing unit;
FIG. 7 is a flow chart of a waveform control table producing process;
FIG. 8 is a flow chart of signal comparing process and error determining process shown in FIG. 7;
FIG. 9 shows examples of target waveform data and PD detected waveform data;
FIG. 10 is a flow chart of waveform control table setting process shown in FIG. 7;
FIGS. 11A to 11J are waveform charts showing a condition that error data is converged by the waveform control table producing processing;
FIG. 12 is a block diagram showing a structure of a modified example of the recording control unit; and
FIG. 13 is a block diagram showing a structure of another modified example of the recording control unit.

The preferred embodiment of the present invention will now be described below with reference to the attached drawings.

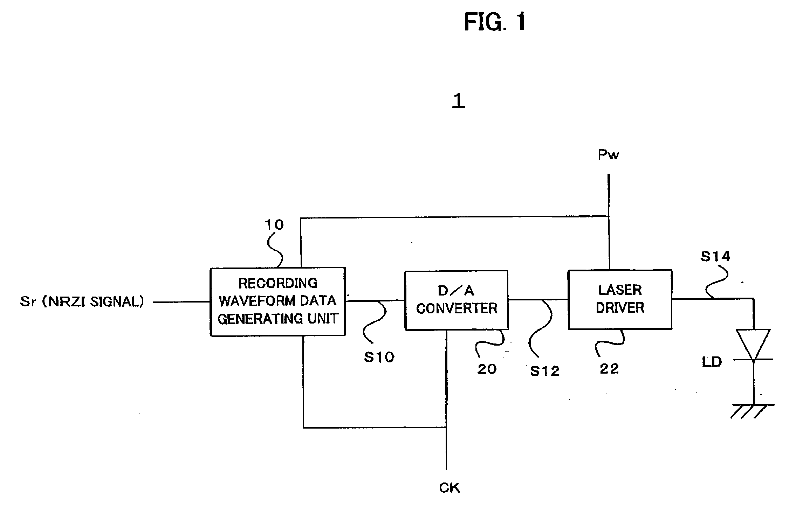

In FIG. 1, a configuration of the recording unit 1 according to a preferred embodiment of this invention is schematically shown. The recording unit 1 is utilized as a recording unit in an information recording apparatus of an optical disc and the like. The recording unit 1 receives the recording signal from outside, and drives the laser diode according to the driving pulse signal generated based on the recording signal to emit the recording laser light.

As shown in FIG. 1, the recording unit 1 includes the recording waveform data generating unit, the D/A converter 20 serving as a D/A converting unit, the laser driver 22 serving as a driving unit, and the laser diode LD serving as the light source. The recording waveform data generating unit 10 outputs the recording waveform data S10 based on the recording signal Sr generally given as a NRZI signal. The recording waveform data S10 is a digital data corresponding to the driving pulse signal (analog signal) given to the laser driver 22. The D/A converter 20 receives and D/A converts the recording waveform data S10 to generate the analog driving pulse signal S12, and supplies it to the laser driver 22. The laser driver 22 supplies the driving current S14 to the laser diode LD based on the driving pulse signal S12 to drive the laser diode LD, and thereby performs information recording on the optical disc.

The clock CK is supplied to the recording waveform data generating unit 10 and the D/A converter 20. The recording waveform data generating unit 10 generates the recording waveform data S10, which is digital data, according to the same clock as the D/A converter 20, and outputs the data S10 to the D/A converter 20.

Recording power information Pw is supplied to the recording waveform data generating unit 10 and the laser driver 22 - The recording power information Pw is information showing an optimum recording power for information recording on the optical disc which is an object of the recording, and is determined in accordance with the characteristic and the like of the optical disc which is the object of the recording. In this example, the recording waveform data generating unit 10 generates the recording waveform data S10 by using the recording power information Pw showing the recording power utilized in recording and the clock CK as parameters.

Since the recording waveform data S10 is a group of the digital data which defines the driving pulse waveform for driving the laser diode LD, specifically, a group of the level data which defines apart or all of the driving pulse signal S12, the waveform can be basically arbitrarily determined. Thus, if the recording waveform data S10 is determined in accordance with the characteristic of the laser diode LD itself utilized in the recording unit 1, the characteristic of the laser driver 22 and the characteristic by the combination of the laser diode LD and the laser driver 22 such that the laser emitting waveform becomes optimum, the respective problems caused by the individual characteristics of the laser diode LD and the like can be eliminated. Such determination may be carried out by measuring and studying the individual characteristics of the laser diode LD, the laser driver 22 and the like, in advance, which are utilized in the recording unit 1, and by taking those characteristics into account. For example, as to the overshoot and the undershoot, the waveform of the driving pulse signal S12 may be designed so that the overshoot and the undershoot in the laser emitting waveform are suppressed, and the group of the digital data forming such waveform may be generated as the recording waveform data S10. Thereby, when the laser driver 22 drives the laser diode LD in accordance with the driving pulse signal S12 , the influence of the overshoot and the undershoot in the laser emitting waveform emitted from the laser diode can be suppressed. In a case that a tilt of the level occurs in the laser emitting waveform due to the individual characteristics of the laser diode LD, for example, the level of the driving pulse signal S12 maybe designed so that the tilt of the level is corrected, and the recording waveform data S10 may be generated according to the level thus designed.

Since the recording waveform data S10 is the digital data, specifically, the group of the data of level sampled by the clock CK of predetermined frequency, the recording waveform data S10 can be set precisely within a range of the clock, frequency. Therefore, the influence which the individual characteristics of the laser diode and the like give to the laser emitting waveform can be corrected precisely. For example, the waveform at the starting portion of the driving pulse waveform may be adjusted in order to accurately correct the overshoot occurring in the laser emitting waveform. In the same way, the waveform around the end portion of the driving pulse waveform may be adjusted in order to accurately correct the undershoot. Thereby, the respective accurate correction can be separately executed to the overshoot and the undershoot. Further, a reverse tilt of the level can be provided to the driving pulse waveform in advance in order to correct the tilt of the laser emitting waveform. For example, in a case that the laser emitting waveform has a level-decreasing characteristic which means that the level is gradually decreasing as the time elapses, the waveform of the driving pulse signal S12 may be set to have a level-increasing characteristic which means that the level is gradually increasing as the time elapses for the same quantity as the level-decreasing characteristic, and the recording waveform data S10 can be generated as the digital data corresponding to the driving pulse signal S12. Namely, if the recording waveform data S10 is generated as the digital data, basically any waveform reshaping can be achieved. Therefore, it is possible to precisely correct any adverse effect caused by the individual characteristics of the laser diode LD and the like.

Next, a preferred example of this invention will be explained with reference to the attached drawings.

### (1) Information Recording and Reproduction Apparatus

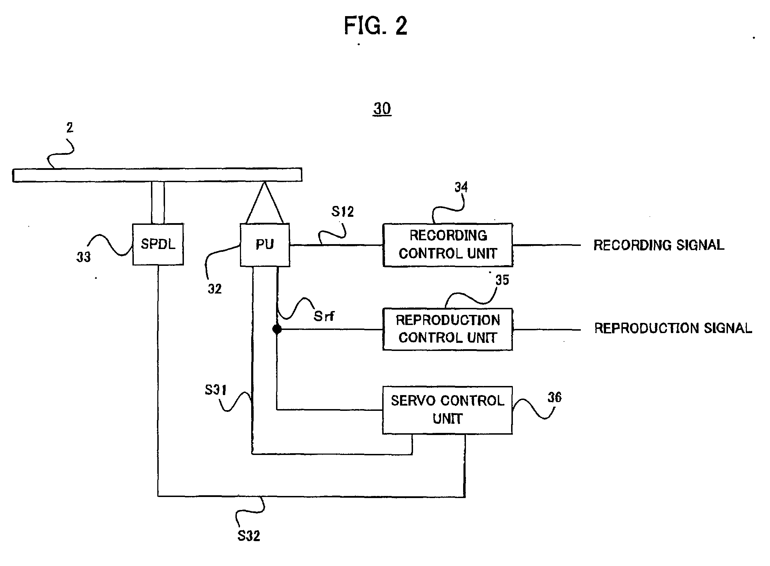

FIG. 2 schematically shows an entire configuration of the information recording and reproducing apparatus according to the embodiment of the invention. The information recording and reproducing apparatus 30 records information on an optical disc 2 and reproduces information from the optical disc 2. For example, the optical disc 2 may be a CD-R (Compact Disc-Recordable) and a DVD-R (Digital Versatile Disc-Recordable) for recording only once, and a CD-RW (Compact Disc-Rewritable) and a DVD-RW (Digital Versatile Disc-Re-recordable) that allow for repeated erasing and recording of information.

The information recording and reproducing apparatus 30 includes an optical pickup 32 for irradiating a recording light and a reproduction light to the optical disc 2, a spindle motor 33 for controlling rotation of the optical disc 2, a recording control unit 34 for controlling recording of information on the optical disc 2, a reproduction control unit 35 for controlling reproduction of information recorded on the optical disc 2, and a servo control unit 36 for various kinds of servo controls. The servo controls include a spindle servo for controlling rotation of the spindle motor 33, and a focus servo and a tracking servo for controlling a relative position of the optical pickup 32 to the optical disc 2.

The recording control unit 34 receives the recording signal. Then, according to processing to be described later, the recording control unit 34 generates a driving pulse signal S12 for driving a laser diode LD in the optical pickup 32 and supplies a driving pulse signal S12 to the optical pickup 32.

The reproduction control unit 35 receives a read-out signal Srf output from the optical pickup 32 and performs predetermined processing on the read-out signal Srf, such as demodulation and decoding, to generate and output reproduction signal.

The servo control unit 36 receives the read-out signal Srf from the optical pickup 32. Based on the signal Srf, the servo control unit 36 supplies the servo signals S31 such as a tracking error signal and a focus error signal to the optical pickup 32 and supplies a spindle servo signal S32 to the spindle motor 33. Thus, various kinds of servo processing are performed, such as the tracking servo, the focus servo, and the spindle servo.

Since various known methods can be applied to the reproduction control and the servo control in the present invention, these controls will not be described in detail.

### (2) Recording Control

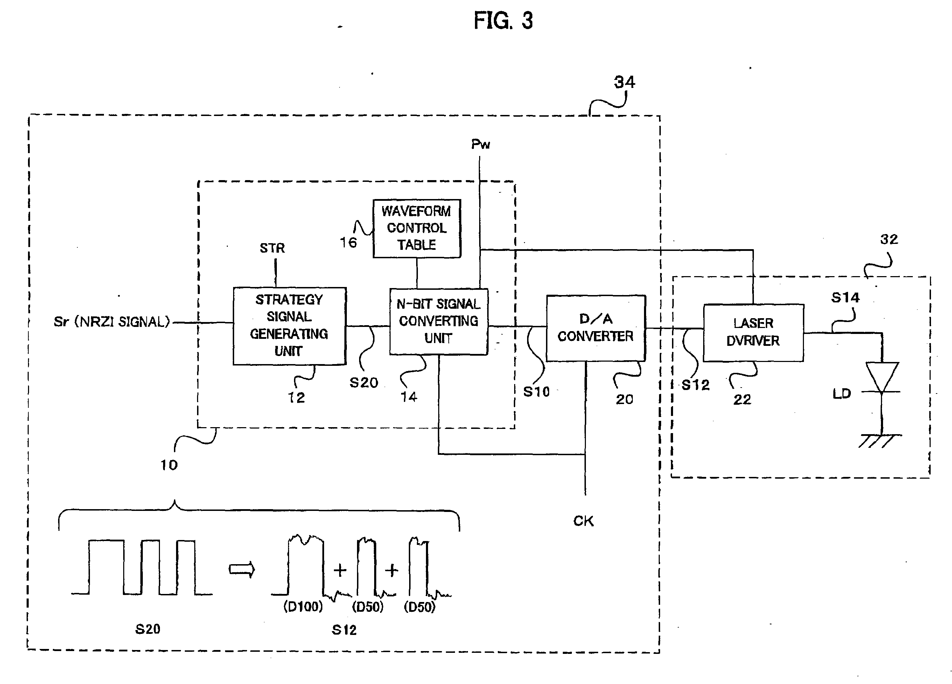

FIG. 3 shows configurations of the optical pickup 32 and the recording control unit 34 according to the embodiment. The optical pickup 32 and the recording control unit 34 correspond to the aforementioned recording unit 1.

The optical pickup 32 includes the laser diode LD which is the light source of the recording laser light, and the laser driver 22. The recording control unit 34 includes the recording waveform data generating unit 10 and the D/A converter 20. The recording waveform data generating unit 10 includes the strategy signal generating unit 12, an N-bit signal converting unit 14 and the waveform control table 16.

The strategy signal generating unit 12 generates the strategy signals for carrying out recording based on the recording signal Sr. The strategy indicates the shape of the driving pulse waveform during driving the laser diode LD based on the recording signal. For example, there are multi-pulse-type strategy which includes a top-pulse and multi-pulses, and non-multi-pulse-type strategy including a top-pulse and a pulse portion having lower-level periods than the top-pulse thereafter or including a top-pulse, a last-pulse and an intermediate level period therebetween. The strategy of any type can be utilized in the present invention.

The information about the strategy is supplied to the strategy signal generating unit 12 as strategy information STR. The strategy information STR includes information about the strategy used and the pulse width of the actual driving pulse waveform according to the strategy (e.g., the level and time width of the top-pulse). The strategy signal generating unit 12 generates the suitable recording strategy signal S20 from the recording signal Sr based on the strategy information STR, and supplies the signal S20 to the N-bit signal converting unit 14.

Based on the recording strategy signal S20 supplied from the strategy signal generating unit 12 and the recording power information Pw, the N-bit signal converting unit 14 generates the recording waveform data S10 corresponding to the driving pulse signal S12 by referring to the waveform control table 16. The recording power information Pw is information indicating the optimum recording power predetermined for the optical disc 2, which is an object of the recording.

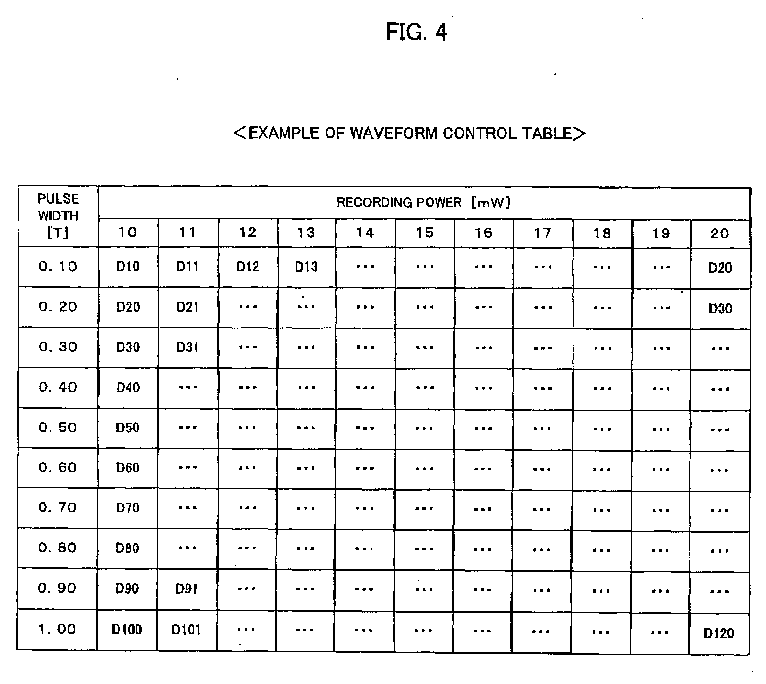

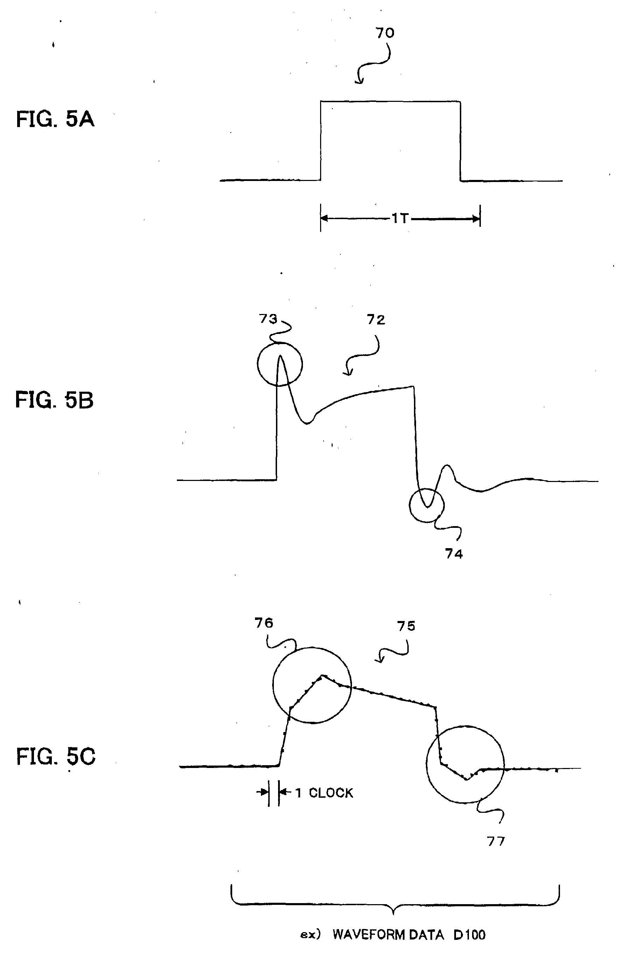

FIG. 4 shows an example of the waveform control table 16. This is the example of the case that the multi-pulse-type strategy is utilized. The digital waveform data D (D10 to D120 in this example) indicating the level for each of pulses which form the top-pulse and the multi-pulse is stored for each of a pulse width and each recording power. As shown in FIG. 5C, the digital data D is a group of digital level values of N-bits which form the pulses having the specific pulse width. FIG. 5C shows the waveform data corresponding to the pulse whose pulse width is 1T. For example, in a case of a certain pulse whose pulse width is 1.00T and whose recording power is 10mW, the waveform data D100 for the certain pulse is group data of the digital level values of the N-bits which form the certain pulse.

Now, as shown by the waveform in FIG. 3, it is assumed that the recording mark of 5T is formed according to the recording signal Sr and that the recording power information Pw is equal to 10mW. Supposing the recording strategy signal S20 corresponding to the recording mark of 5T is formed by a single top-pulse whose pulse width is 1T and two multi-pulses whose pulse width is 0.5T, the N-bit signal converting unit 14 obtains the waveform data D100 for the single top-pulse and also obtains the waveform data D50 for the two multi-pulses, by referring to the waveform control table 16 shown in FIG. 4. Then, the N-bit signal converting unit 14 supplies the combination of the waveform data of those pulses to the D/A converter 20 as the recording waveform data S10 in a form of digital data having a sampling-frequency of the clock CK.

The D/A converter 20 converts the recording waveform data S10, which is digital data, to an analog signal in accordance with the clock CK, and inputs the signal to the laser driver 22 as the driving pulse signal S12 . The laser driver 22 supplies the driving current S14 to the laser diode LD according to the driving pulse signal S12, and the laser diode LD emits the recording laser light corresponding to the recording signal Sr.

In the embodiment, as to the pulses which have plural widths and which form the recording strategy signal S20 generated according to the strategy, the digital waveform data D for each pulse width and each recording power are prepared and stored in the waveform control table 16. Based on the recording strategy signal S20 supplied from the strategy signal generating unit 12, the N-bit signal converting unit 14 generates the recording waveform data S10 by obtaining the corresponding waveform data D from the waveform control table 16 for each pulse forming the recording strategy signal S20 and combining the data. Thus, if the waveform data D stored in the waveform control table 16 is optimally predetermined in consideration of the individual characteristics of the laser diode LD, the laser driver 22 and the like, effective correction can be executed for the overshoot/undershoot and the level tilt of the laser emitting waveform which may occur due to the individual characteristics of the laser diode LD and the like.

It is noted that the waveform control table 16 may be a storage unit such as a ROM that stores the predetermined digital data.

### (3) Waveform Control Table

Next, an example of the digital data D stored in the waveform control table 16 will be explained with reference to FIGS. 5A to 5C. FIG. 5A shows a pulse waveform 70 whose pulse width is 1T. The pulse waveform whose pulse width is 1T is often used as the top-pulse in the multi-pulse-type strategy. It is assumed that the laser emitting waveform 72 obtained by driving a specific laser diode LD by the pulse waveform 70 whose pulse width is 1T is the waveform shown in FIG, 5B. The laser emitting waveform 72 includes the overshoot 73 and the undershoot 74. In FIG. 5B, the overshoot and the undershoot are exaggerated in comparison with the actual overshoot and undershoot so as to explain easily. The waveforms and the frequency components of the overshoot 73 and the undershoot 74 are different according to the individual characteristics of the laser diode LD and the like. Therefore, as an example of the waveform data D, the driving pulse waveform 75 shown in FIG. 5C is stored in the waveform control table 16. The waveform 75 is designed so that the rise-up is slow at the start of the pulse 70 whose pulse width is 1T, e.g., at the position where the overshoot 73 occurs, as shown in the circle 76, and thus the occurrence of the overshoot is suppressed. Also, as shown in the circle 77, the waveform is designed so that the undershoot is cancelled at the fall-down portion of the pulse 70, e.g., at the position where the undershoot 74 occurs. Like those, if the waveform data D which defines the recording waveform data S12 (e.g., the digital data D stored in the waveform control table 16) is appropriately predetermined in accordance with the individual characteristics of the laser diode LD and the like, the adverse effects, such as distortion of the laser emitting waveform, caused by the individual characteristics of the laser diode LD and the like can be suppressed.

In the above example, the recording waveform data S10 is produced so that the overshoot and the undershoot in the laser emitting waveform are suppressed. In the same way, it is possible to produce the recording waveform data S10 to correct the level tilt and the like occurring in the laser emitting waveform. For example, if the level of the laser emitting wave form corresponding to 1T pulse as shown in FIG. 5A has such a tilt that the level decreases as the time elapses, the recording waveform data S10 may be produced such that the level increases as the time elapses and stored in the waveform control table 16 in order to correct the level tilt.

### (4) Generating Waveform Control Table

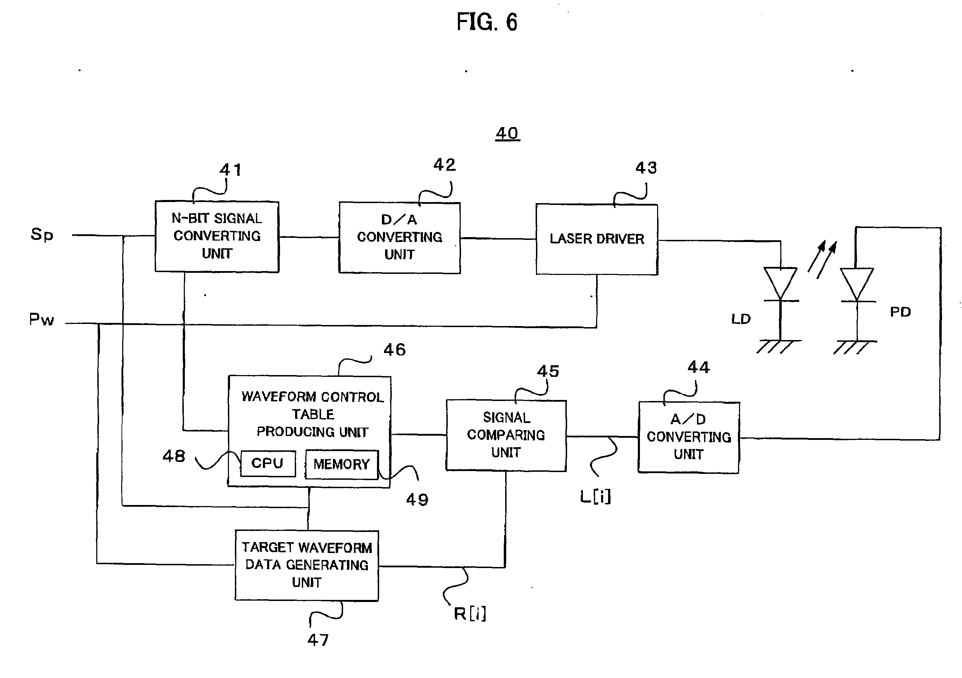

Next, how to generate the waveform control table will be explained. FIG. 6 shows the configuration of the waveform control table producing device. As shown in FIG. 6, the waveform control table producing device 40 includes an N-bit signal converting unit 41, a D/A converting unit 42, a laser driver 43, an LD serving as the recording laser light source, a photodiode PD, an A/D converting unit 44, a signal comparing unit 45, a waveform control table producing unit 46, and a target waveform data generating unit 47. The waveform control table producing unit 46 includes a CPU 48 for executing arithmetic operation and a memory 49 serving as a work memory.

The N-bit signal converting unit 41, the D/A converting unit 42 and the laser driver 43 are used to experimentally emit the recording laser light for the purpose of generating the waveform control table. On the other hand, the A/D converting unit 44, the signal comparing unit 45, the waveform control table producing unit 46 and the target waveform data generating unit 47 are used for receiving and evaluating the recording laser light which is experimentally emitted and for generating the waveform data D to be stored in the waveform control table.

Next, the operation will be explained. A predetermined initial value is stored in the waveform control table producing unit 46. As shown in the FIG. 4, the waveform data D stored in the waveform control table 16 is determined by using the pulse width and the predetermined recording power as the parameters. Thus, as to a certain pulse width and a certain predetermined recording power, the N-bit signal converting unit 41 refers to the initial value in the waveform control table producing unit 46, and converts the specific pulse signal to the N-bit waveform data. Then, the D/A converting unit 42 converts the data to the analog signal to generate the driving pulse signal and supplies the signal to the laser driver 43. When the laser driver 43 drives the laser diode LD according to the driving pulse signal, the recording laser light is emitted. The photodiode PD receives the emitted recording laser light, generates a detecting signal and supplies the signal to the A/D converting unit 44. The A/D converting unit 44 converts the detecting signal to a digital PD detected waveform data L[i], and supplies the data to the signal comparing unit 45.

On the other hand, the prepared target waveform data is stored in the target waveform data generating unit 47, and the signal comparing unit 45 compares the PD detected waveform data L[i] obtained from the A/D converting unit 44 with the target waveform data R[i] obtained from the target waveform data generating unit 47. It is noted that the target waveform data is the preferred laser emitting waveform such as the digital data of the rectangle pulse waveform shown in FIG. 5A. In a case that an error between the data L [i] and R[i] is larger than a predetermined value, the waveform control table producing unit 46 updates the initial value, executes the laser emission based on the updated digital data and repeats comparing the PD detected waveform data L [i] and the target waveform data R [i]. In that way, the PD detected waveform data L[i] whose error from the target waveform data is smaller than the predetermined value is determined as the waveform data D to be stored in the waveform control table 16.

The waveform control table 16 is produced by executing the above process for plural necessary pulse widths and recording powers and by determining the waveform data D corresponding to each combination of them. In this embodiment, the waveform control table 16 stores the waveform data which use the pulse width and the recording power as the parameters as shown in FIG. 4. If the waveform control table 16 is produced by using other parameter, the target waveform data and the digital data which provide the waveform data having error within a predetermined error range may be obtained for each parameter, and the waveform control table may be produced.

### (5) Waveform Control Table Generating Processing

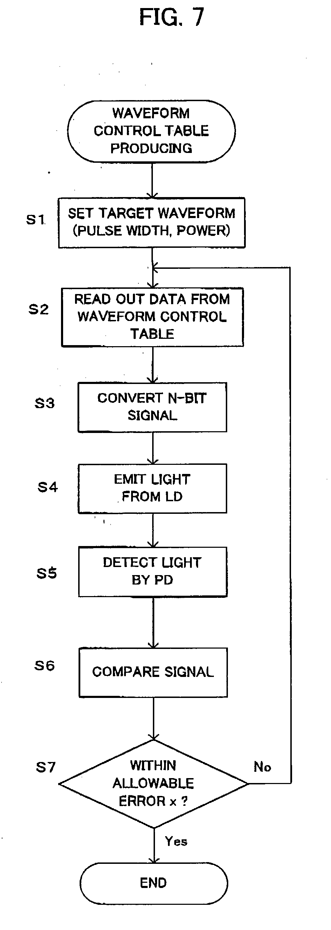

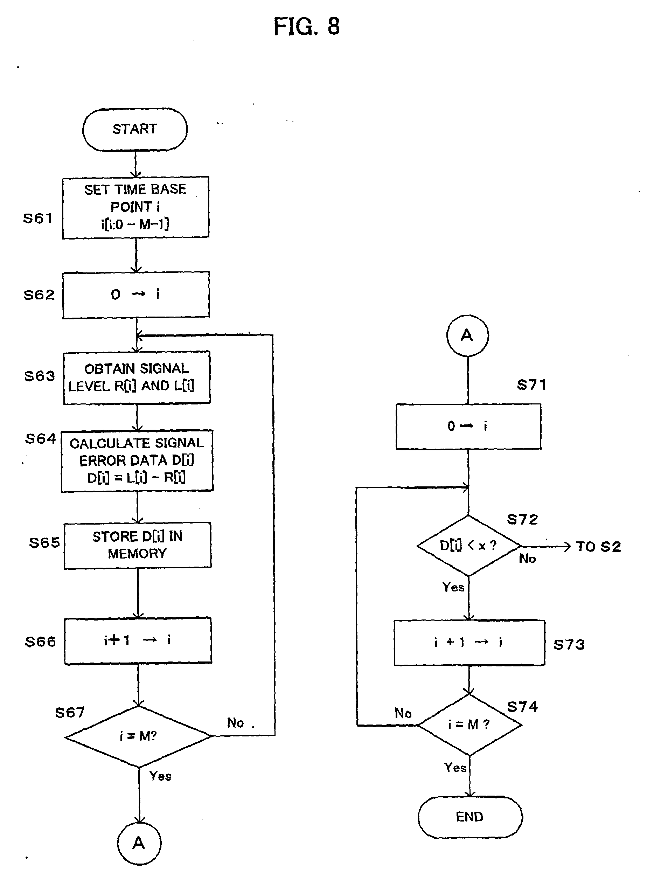

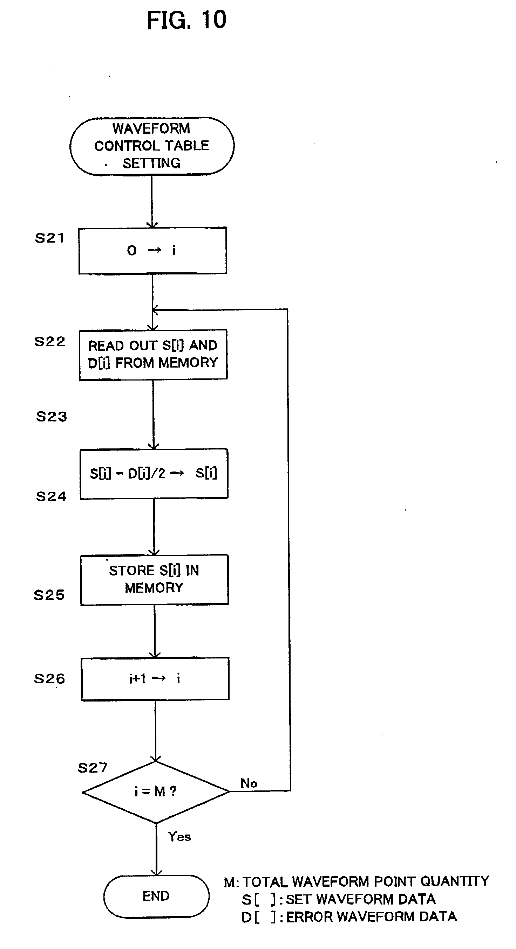

Next, the waveform control table producing processing will be explained. FIG. 7 shows a main routine of the waveform control table producing processing, and FIG. 8 and FIG. 10 show its subroutines. This waveform control table producing processing is executed by the waveform control table producing unit 46 explained with reference to FIG. 6. Specifically, the waveform control table producing processing is executed by the CPU 48 and the like, provided in the waveform control table producing unit 46 inside the waveform control table producing device, which executes the prepared program. The generated data of the waveform control table is temporally stored in the memory 49 such as a RAM provided in the waveform control table producing unit 46 , and thereafter the data is stored in the waveform control table 16. As a prerequisite, the prepared initial values for the respective combinations of the pulse widths and the respective recording powers are stored in the memory 49 in the waveform control table producing unit 46. The initial value may be digital data forming a general rectangle pulse wave . The target waveform data is stored in the target waveform data generating unit 47. The target waveform data indicates an ideal driving pulse wave form needed to perform accurate information recording, and digital data defining such a waveform is stored as the target waveform data.

First of all, the waveform control table producing unit 46 determines the pulse width and the recording power to set the target waveform (step S1). The pulse width and the recording power correspond to two parameters of the pulse width and the recording power in the example of the waveform control table 16 shown in FIG. 4. Namely, the pulse width and the recording power are varied to obtain digital data to be stored in the waveform control table 16 shown in FIG. 4.

When the specific pulse width and recording power are determined, the CPU 48 reads out the initial value corresponding to the pulse width and recording power from the memory 49 in the waveform control table producing unit46 (step S2) , and the N-bit signal converting unit 41 converts the value to the digital waveform data of N-bit (step S3). The digital waveform data is converted to an analog signal by the D/A converting unit 42, and the analog signal is supplied to the laser driver 43 as the analog driving pulse waveform signal. The laser driver 43 drives the laser diode LD by the driving pulse waveform signal to emit the recording laser light (step S4). The recording laser light is detected by the photodiode PD and converted to an electric signal (step S5), and is supplied to the signal comparing unit 45 as the PD detected waveform data L[i] by the A/D converting unit 44.

To the contrary, the target waveform data generating unit 47 supplies the target waveform data R[i] to the signal comparing unit 45. The signal comparing unit 45 compares the PD detected waveform data L[i] with the target waveform data R[i] (step S6), and determines whether the difference (i.e., error) is smaller than the predetermined error x or not (step S7).

In that way, the steps S2 to S7 are repeated until the difference between the PD detected waveform data L[i] corresponding to the recording laser light emitted from the laser diode LD and the target waveform data R[i] becomes smaller than the predetermined error x. When the difference becomes smaller than the predetermined error x, the process ends, and the obtained value is stored in the waveform control table 16 as the waveform data D corresponding to the pulse width and the recording power. By repeating the process with the pulse width and the recording power being varied, the waveform data D corresponding to the plural combinations of the pulse width and the recording power are stored in the waveform control table 16 as shown in FIG. 4.

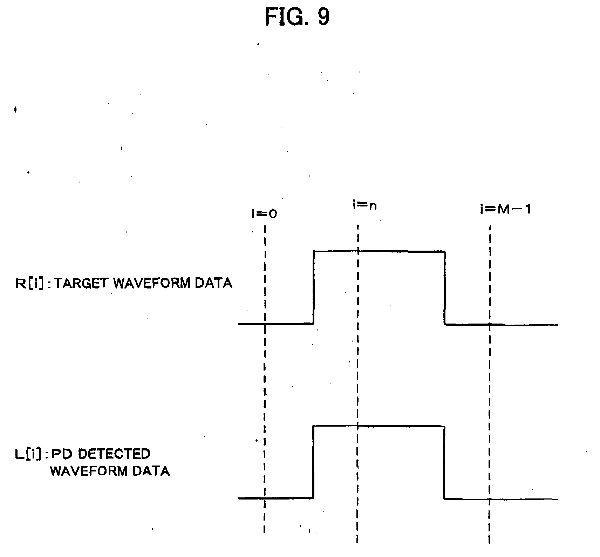

Next, the signal comparing processing and the signal error determining processing executed in steps S6 and S7 in FIG. 7 will be explained in detail with reference to FIG. 8 and FIG. 9.

FIG. 8 is a detailed flow chart of the signal comparing processing and the signal error determining processing. Basically, steps S61 to S67 correspond to the signal comparing processing (step S6) in FIG. 7, and steps S71 to S74 correspond to the error determining processing (step S7) in FIG. 7.

FIG. 9 shows waveform examples of the target waveform data R[i] and the PD detected waveform data L[il which are objects of the comparison in the signal comparing unit 45. The target waveform data R[i] is digital data which the target waveform data generating unit 47 supplies to the signal comparing unit 45, and includes M time base points (sampling points) on the time axis shown in the example in FIG. 9 . The PD detected waveform data L[i] is data obtained by digitizing the detecting signal output from the photodiode PD by the A/D converting unit 44, and is supplied from the A/D converting unit 44 to the signal comparing unit 45. It is noted that "i" indicates the time base point of digital data R[i] and L[i].

In FIG. 8, to begin with, the CPU 48 sets the time base point i (step S61), and then sets the time base point to zero (i=0) (step S62). The signal comparing unit 45 obtains the target waveform data R[i] and the PD detected waveform data L[i] corresponding to the time base point i (step S63), and calculates the error data D[i] between them (step S64). Thus, the error D[0] corresponding to the time base point i=0 is obtained, and the CPU 48 temporally stores the data in the memory 49 (step S65). The CPU 48 increments the time base point i by one (step S66), and determines whether or not the time base point i reaches M which is the last time base point (step S67). In that way, by repeating steps 363 to 366 until the time base point "i" becomes equal to (i.e., i=M) , the CPU 48 obtains the error D[i] between the target waveform data R[i] and the PD detected waveform data L[i] for each time base point, and stores the error D[i] in the memory.

Next, the CPU 48 sets the time base point i=0 again (step S71) _{,} and determines whether the error D[i] is smaller than the predetermined allowable error x or not (step S72). In a case that the error D[i] is smaller than the allowable error x, the CPU increments the time base point i by one (step S73), and determines whether the time base point i reaches the last time base point M or not (step S74). Until the time base point i becomes equal to M, it is determined whether the error D[i] corresponding to each time base point i is within the allowable error x or not. If even a single time base point i at which the error D[i] is larger than the allowable error x is found, the utilized set waveform data S[i] is determined to be insufficient and the process returns to step S2 shown in FIG. 7. To the contrary, if the error D[i] is within the allowable error x for all the time base points i (step S74: Yes), the utilized set waveform data S[i] is determined to be appropriate, and the process ends.

Next, the waveform control table setting processing will be explained in detail with reference to FIG. 10. As described above, in a case that the signal comparing processing is executed by utilizing a certain PD detected waveform data L[i] and then the error D[i] larger than the allowable error x is found out, the set wave form data S[i] is considered as inappropriate. Thus, in the waveform control table setting processing, the set waveform data S[i] stored in the waveform control table producing unit 46 is updated.

First of all, the CPU 4B sets the time base point i=0 (step S21), and reads out the set waveform data S[i] which is set at that time and the error D[i] which is already stored from the memory 49 in the waveform control table producing unit 46 (step S22). The value obtained by subtracting the half of the error D[i] from the set waveform data S[i] is regarded as the updated set waveform data S[i] (step S24). By this process, the set waveform data S[i] is corrected so that the error D[i] is reduced. The corrected set waveform data S[i] is stored in the memory 49. In this way, the set waveform data S[i] for one time base point is corrected.

Next, the time base point i is incremented by one (step S26), and the set waveform data S[i] is corrected by repeating the steps S22 to S26 until the time base point i reaches the last time base point M (step S27: No). In this way, the set waveform data S[i] is corrected so that the error D [i] previously calculated is reduced.

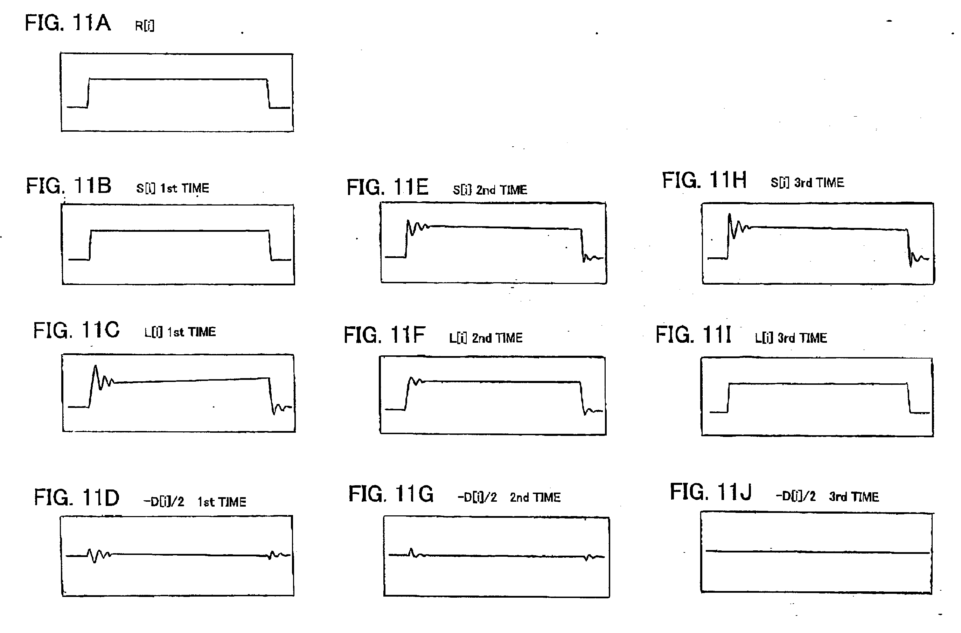

FIGS. 11A to 11J show an example that the error D[i] is converging by the correction of the set waveform data S[i]. FIG. 11A shows the target waveform data R[i] and FIG. 11B shows the set waveform data S[i] stored as the initial value in the waveform control table 46. FIG. 11C shows the PD detected waveform data L[i] obtained by driving the laser diode LD by the set waveform data S[i] shown in FIG. 11B. As shown, the overshoot, the undershoot and the level tilt in the laser emission waveform are caused due to the individual characteristics of the laser diode and the like. FIG. 11D shows the half of the error D[i] (specifically, "-D[I]/2") obtained from the set waveform data S[i] shown in FIG. 11B and the PD detected waveform data L[i] shown in FIG. 11C. The corrected set waveform data S[i] shown in FIG. 11E is obtained by subtracting the half of the error D[i] from the set waveform data S[i] shown in FIG. 11B.

Similarly, by repeatedly obtaining the PD detected waveform data L[i] by driving the laser diode LD and obtaining the set waveform data S[i] by subtracting the half of the error data D[i], the error data D[i] is reduced by the first correction of the set waveform data S[i] as shown in FIG. 11G. The error data D[i] is further reduced by the second correction of the set waveform data S[i] as shown in FIG. 11J, and becomes smaller than the allowable error x. The set waveform data S[i] in a case that the error data D[i] becomes smaller than the allowable error x is stored in the waveform control table 16.

In the above example, though the correction of the set waveform data S[i] is executed by subtracting the half of the error data D[i], the correction of the set waveform data S[i] may be executed by subtracting the error data at any rate other than 1/2. Further, there are some methods of correcting the set waveform data S[i] other than the method of subtracting a certain rate of the error data D[i] from the set waveform data S[i]. For example, the set waveform data S[i] can be corrected by utilizing a specific function which uses the set waveform data S[i] and the error data D[i] as parameters. Namely, according to various methods by which the error data D[i] is able to converge, i.e., make the error D[i] approach to zero, the set waveform data S[i] can be corrected.

In this way, as to the waveform control table producing unit shown in FIG. 7, the correction of the set waveform data is repeated until the error between the set waveform data and the target waveform data stored in the waveform control table becomes within the predetermined allowable range. As a result, in the waveform control table thus produced, a set waveform data is stored which has a characteristic within a predetermined allowable range from the target waveform data in a case that the laser diode LD utilized in the waveform control table producing unit is employed, i.e., in consideration of the individual characteristics of the laser diode LD. Accordingly, during an actual information recording, if the set waveform data is utilized and the driving pulse signal of the laser diode is generated, the information recording with satisfactory laser emitting characteristics can be carried out in consideration of the individual characteristics of the laser diode and the like.

### [1st Modification]

In the above embodiment, digital data of pulse waveforms of various pulse widths, which are the components of the recording strategy signal, is stored in the waveform control table. Specifically, in the example of FIG. 4, the preferred waveform data corresponding to the pulse waveforms whose pulse widths range from 0.10T to 1.00T are stored. During the actual information recording, those pulse waveforms are combined in accordance with the recording data, the strategy information and the set recording power, thereby to generate the driving pulse waveforms.

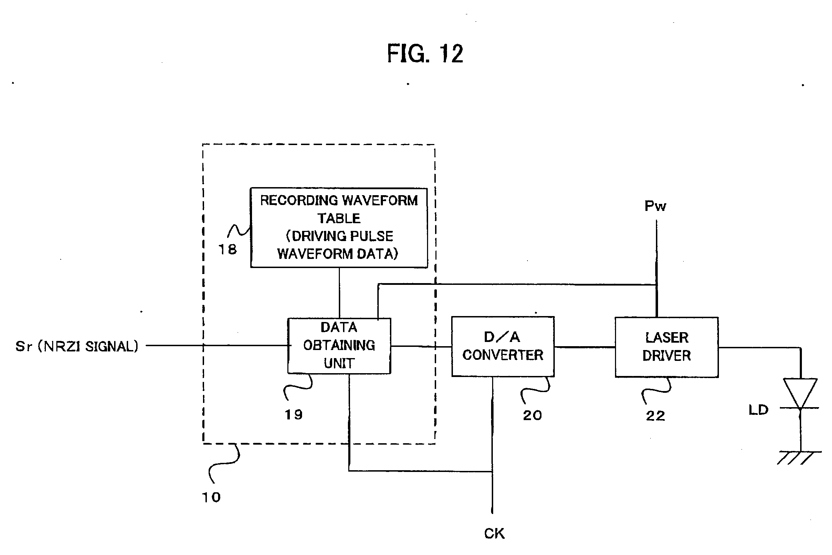

Instead, the driving pulse waveform data itself for each of recording data can be stored as digital data in the waveform control table. FIG. 12 shows an example of the configuration. The digital data of the driving pulse waveform itself is stored in the recording waveform table 18. In this case, if the strategy has been determined, the digital data of the driving pulse waveform itself is stored in the recording waveform table 18 with using the recording data (3T, 4T, ...) and the set recording power as parameters. Namely, in a case of employing the multi-pulse-type strategy, the digital data of the driving pulse waveform itself including one top-pulse is stored for the recording data 3T. Similarly, the digital data of the driving pulse waveform itself including one top-pulse and two multi-pulses are stored for the recording data 5T. The data obtaining unit 19 reads out the digital data of the driving pulse waveform itself according to the recording signal Sr and the recording power information Pw. The D/A converter 20 converts the data to the analog driving pulse signal to drive the laser diode. In accordance with the modification, since it is not needed to generate the driving pulse signal corresponding to the recording signal by combining the digital data of plural pulse widths, the burden of the recording waveform data generating unit 10 is reduced during information recording.

### [2nd Modification]

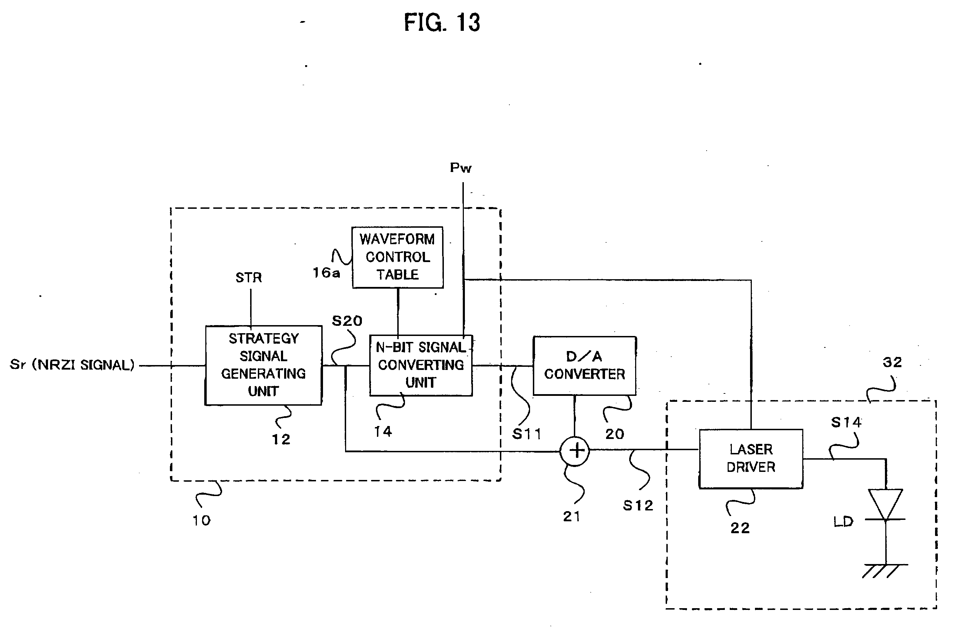

FIG. 13 shows another modification of the recording control unit. In this modification, the strategy signal (the driving pulse waveform) output from the strategy signal generating unit 12 is utilized, and the correction data is added to the strategy signal to generate the preferred driving pulse signal S12. Therefore, predetermined correction data (digital data) for each of predetermined condition (e.g., the pulse width and the recording power) is stored in the waveform control table 16a. The N-bit signal converting unit 14 reads out the correction data from the waveform control table 16a based on the pulse width provided by the strategy signal S20 and the recording power information Pw, and supplies the data to the D/A converter 20. The D/A converter 20 converts the correction data to an analog correction signal and supplies it to an adder 21. The adder 21 adds the strategy signal S20 provided from the strategy signal generating unit 12 (the driving pulse waveform signal) and the correction signal provided from the D/A converter 20 to generate the driving pulse signal S12, and supplies the signal S12 to the laser driver 22. In this modification, since the correction data is prepared as the predetermined digital data, the resolution of the correction data can be increased.

### [Other Modification]

In the above-described embodiment, the snubber circuit for suppressing the overshoot and the undershoot is eliminated, and the driving pulse waveform is generated based on the recording waveform data, which is digital data. However, the above-described method can be utilized together with the snubber circuit. For example, it is possible that the overshoot and the undershoot are corrected by the snubber circuit and only the level tilt component of the laser emitting waveform is corrected in the above-described way. It is also possible that correction of the overshoot and the undershoot is executed by the snubber circuit to a certain extent, and more detailed correction is executed by the above-described method of the embodiment.

As explained above, the information recording apparatus according to the embodiment includes the laser diode for emitting the recording light for information recording, the recording waveform data generating unit for outputting the recording waveform data, which is digital data, for determining the driving pulse signal which drives the laser diode, and the laser driver for converting the recording waveform data to an analog signal and driving the laser diode. Therefore, if the digital recording waveform data is precisely set in consideration of the individual characteristics of the laser diode, the laser driver and the combination thereof, the influence of such individual characteristics can be eliminated and accurate information recording can be performed.

Accordingly, waveform shaping is possible without affecting the rate of the rise-up and the fall-down. Also, separate waveform shaping to the overshoot and the undershoot is possible. Moreover, in a case of the pulse waveform whose rate of the rise-up and the fall-down is slow, the rate of the rise-up and the fall-down can be improved by executing such correction as to deliberately provide the overshoot and the undershoot.

## Claims

1. An information recording apparatus (1,30) comprising:
a light source (LD) which emits a recording light for information recording;
a recording waveform data generating unit (10) which generates recording waveform data (S10) which is predetermined digital data corresponding to an input recording signal (Sr);
a D/A converting unit (20) which D/A-converts the recording waveform data to generate a driving pulse signal (S12); and
a driving unit (22) which drives the light source (LD) to emit the recording light based on the driving pulse signal, wherein the recording waveform data (S10) is determined in accordance with characteristics of the light source (LD), the driving unit (22) and a combination thereof.

2. The information recording apparatus (1,30) according to claim 1, wherein the recording waveform data generating unit (10) comprises:
a unit (12) which generates a recording strategy signal based on the recording signal and strategy information;
a storing unit (16) which stores predetermined waveform data determined in accordance with the characteristics of the light source, the driving unit and the combination thereof, for pulse waveforms of plural pulse widths; and
a generating unit (14) which obtains the waveform data corresponding to the pulse waveform forming the strategy signal from the storing unit and generates the recording waveform data (S10).

3. The information recording apparatus (1,30) according to claim 1, wherein the recording waveform data generating unit (10) comprises:
a storing unit (18) which stores predetermined waveform data determined in accordance with the characteristics of the light source, the driving unit and the combination thereof, for recording waveform corresponding to plural recording signals; and
a generating unit (19) which obtains waveform data corresponding to the input recording signal from the storing unit and generates the recording waveform data.

4. The information recording apparatus (1,30) according to claim 2 or 3, wherein the storing unit (16) stores the waveform data for each of a recording power which is a power of a recording light emitted from the light source in recording, and the generating unit (14) refers to the storing unit according to a recording power to be utilized and generates the recording waveform data.

5. The information recording apparatus (1,30) according to any one of claims 1 to 4, wherein the recording waveform data (S10) includes a level for suppressing an overshoot and/or an undershoot at a position corresponding to a position at which a waveform of the recording light emitted from the light source forms the overshoot and/or the undershoot.

6. The information recording apparatus (1,30) according to any one of claims 1 to 5, wherein the recording waveform data (S10) has a level for canceling a level tilt in a case that a waveform of a recording light emitted from the light source has the level tilt.

7. An information recording method executed by an information recording apparatus (1, 30) which comprises a light source (LD) which emits a recording light for information recording and a driving unit (22) of the light source, comprising:
a process which generates recording waveform data (S10) which is predetermined digital data corresponds to an input recording signal (Sr) and determined in accordance with characteristics of the light source, the driving unit and a combination thereof;
a process which generates a driving pulse signal (S12) by D/A-converting the recording waveform data (S10); and
a process which performs information recordingby driving the light source (LD) by the driving unit (22) to emit the recording light based on the driving pulse signal (S12).

8. An information recording apparatus (1,30) comprising:
a light source (LD) which emits a recording light for information recording;
a strategy signal generating unit (12) which generates a strategy signal (S20) which is a pulse waveform signal corresponding to an input recording signal (Sr);
a correcting data generating unit (14) which generates correcting data which is predetermined digital data corresponding to the input recording signal (Sr);
a D/A converting unit (20) which D/A-converts the correcting data to generate correcting signal which is an analog signal;
an adding unit (21) which adds the strategy signal and the correcting signal to generate a driving pulse signal (S12); and
a driving unit (22) which drives the light source (LD) to emit the recording light based on the driving pulse signal (S12), wherein the correcting data is determined in accordance with characteristics of the light source (LD), the driving unit (22) and a combination thereof.

9. The information recording apparatus (1,30) according to claim 8, wherein the correcting data includes a level for suppressing an overshoot and/or an undershoot at a position corresponding to a position at which a waveform of a recording light emitted from the light source forms the overshoot and/or the undershoot.

10. The information recording apparatus (1,30) according to claim 8 or 9, wherein the correcting data has a level for canceling a level tilt in a case that a waveform of a recording light emitted from the light source includes the level tilt.

11. An information recording method which is executed by an information recording apparatus (1,30) including a light source which (LD) emits a recording light for information recording and a driving unit (22) of the light source, comprising:
a process which generates a strategy signal (S20) which is a pulse waveform signal corresponding to an input recording signal (Sr);
a process which generates correcting data which corresponds to the input recording signal and is digital data predetermined in accordance with characteristics of the light source (LD), the driving unit (22) and a combination thereof;
a process which D/A-converts the correcting data to generate a correcting signal which is an analog signal;
a process which adds the strategy signal and the correcting signal to generate a driving pulse signal (S12); and
a process which executes information recording by driving the light source (LD) to emit the recording light based on the driving pulse signal (S12).

12. A waveform data generating device (40) comprising:
a unit (41) which obtains set waveform data which is digital data corresponding to a recording signal (Sp);
a D/A converting unit (42) which D/A-converts the set waveform data to generate a driving pulse signal;
a driving unit (43) which drives a light source (LD) by the driving pulse signal to emit a recording light;
a light detecting unit (PD) which receives the recording light and generates a detecting signal;
an A/D converting unit (44) which A/D-converts the detecting signal and generates detected waveform data;
a unit (45) which compares a prepared target waveform data and the detected waveform data to calculate error data;
a unit (46) which updates the set waveform data in a case that the error data is larger than a predetermined allowable error (x); and
a unit (46) which stores corresponding set waveform data as waveform data corresponding to the recording signal in a case that the error data is smaller than the predetermined allowable error (x).

13. A waveform data generating method comprising:
a first process which obtains set waveform data which is digital data corresponding to a recording signal (Sp);
a second process which D/A-converts the set waveform data to generate a driving pulse signal;
a third process which drives a light source (LD) by the driving pulse signal to emit a recording light;
a fourth process which receives the recording light and generates a detecting signal;
a fifth process which A/D-converts the detecting signal and generates detected waveform data;
a sixth process which compares a prepared target waveform data and the detected waveform data and calculates error data; and
a process which updates the set waveform data and repeats the processes from the first process to the sixth process in a case that the error data is larger than a predetermined allowable error (x); and
a process which stores corresponding set waveform data as waveform data corresponding to the recording signal in a case that the error data is smaller than the predetermined allowable error (x).
